# EUROPEAN PATENT SPECIFICATION

(11) **EP 0 534 788 B1**
(45) Date of publication and mention of the grant of the patent: **10.01.1996**
(21) Application number: 92308775.3
(22) Date of filing: 25.09.1992
(51) Int. Cl.: F16F 9/32

(54) **Method and apparatus for exchanging seal for shock absorbing apparatus**
Methode und Einrichtung zum Auswechseln einer Dichtung für Dämpfungseinrichtung
Méthode et appareil pour changer le joint d'étanchéité d'un dispositif d'amortissement des chocs

(30) Priority: 27.09.1991 JP 248817/91; 27.09.1991 JP 78342/91
(43) Date of publication of application: 31.03.1993
(73) Proprietor: ALL NIPPON AIRWAYS CO. LTD., Tokyo (JP)
(72) Inventor: Kigawa, Kazuya, Yokohama-shi, Kanagawa-ken (JP); Furukawa, Kenji, Kazugai-shi, Aichi-ken (JP); Deguchi, Tetsu, Nagareyama-shi, Chiba-ken (JP); Inoue, Sachiharu, Sakura-shi, Chiba-ken (jp); Endo, Norikatsu, Ikeda-shi, Osaka (JP); Yanagisawa, Tatsuo, Toyonaka-shi, Osaka (JP); Ikegami, Shinji, Abiko-shi, Chiba-ken (JP); Omagari, Yasuyuki, Totsuka-ku, Yokohama-shi, Kanagawa-ken (JP); Kihara, Koji A-406, Zennikku Midorigaokashataku, Yokohama-shi, Kanagawa-ken (JP); Sugawara, Tachiki, Shinagawa-ku, Tokyo (JP); Shimizu, Kenzo, Chitose-shi, Hokkaido (JP)
(74) Representative: West, Alan Harry

(56) References cited:
- DE-A- 2 145 411
- US-A- 3 889 904

## Description

This invention relates to a method and apparatus for exchanging a seal of a shock absorbing device of a heavy moving object, particularly an airplane.

Generally, in an airplane, a shock absorbing device known as a shock strut is provided between the wheels and the body or wing in order to reduce shocks which are received upon landing and in ground movement.The shock strut has an expandable elongated pillar shape having therein a, cylinder and a piston. A gas and an oil are contained in the shock strut and shock is reduced by a cooperating function of them. Therefore, an O-ring type seal for the oil is provided for the shock strut. Such a seal must be exchanged when an oil leakage occurs.

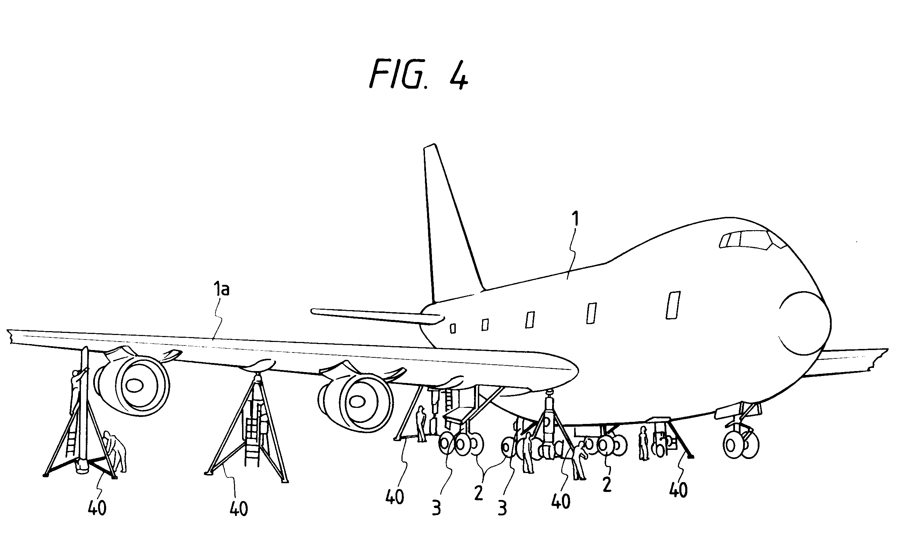

A method of exchanging the seal of the shock strut which has conventionally been used will now be briefly explained with reference to Fig. 4. Fig. 4 is a diagram showing the operation of exchanging the seal of the shock strut according to the conventional technique. In Fig. 4, shock struts 3 are coupled between a wing 1a and the body 1 of an airplane and wheels 2. As will be explained below, since the seal of the shock strut 3 is arranged between the cylinder and piston of the shock strut 3, the seal is exposed to the outside by extending the shock strut. Since the seal is an O-ring type seal, in order to exchange the seal the wheels 2 and the shock strut 3 are disconnected and, after that, a new seal must be inserted through the gap between them. Consequently, as shown in Fig. 4, a plurality of large jacks 40 are installed below the body 1 and wing 1a of the airplane and the whole airplane is lifted up by the large jacks 40, thereby exposing the seals in the shock struts 3.

According to such a conventional method, however, it takes some time to install the large jacks 40, an advanced technique is required to lift up the airplane by the large jacks 40 while maintaining the airplane in the horizontal state, the jacks become displaced unless certain supporting positions are selected, and much time and labor are needed. There is also a problem on the- safety. In order to attach the O-ring type seal into the shock strut 3, it is necessary to elevate the shock strut and to insert the seal from below. Therefore, hitherto, when the seal is exchanged, the shock strut is suspended from its upper end by a rope or the like and the seal must be attached in a predetermined location from the lower end of the shock strut while passing around the rope which suspends the shock strut, so that much labor is required. The leg portion of the shock strut has a slant surface which faces downward and it is undesirable to support the leg portion by a jack or the like from the viewpoint of instability and working safety.

Also, not all airfields have such facilities as large jacks. It is however necessary that the seals can be easily exchanged as required at any location.

The present invention seeks to provide a method which can easily, safely and promptly exchange seals and apparatus for use in performing that method.

According to the invention, there is now provided a method for replacing an O-ring type seal in a shock-absorbing device on a body which is mounted on wheels via a plurality of such shock-absorbing devices, each shock-absorbing device incorporating a cylinder and a cooperating piston and one of the cylinder and piston being coupled to the body and the other being coupled to the wheels, and a fluid in the space between the cylinder and the piston to absorb shock forces which are transferred from the wheels to the body, the method comprising the steps of:
exposing the seal to be replaced by extending the piston and the cylinder to wards each other;
removing the exposed seal;
separating from its associated wheels the shock-absorbing device having the seal to be replaced;
inserting a new seal from a portion of the shock-absorbing device separated from the wheels; and
locating the new seal in its operative position. Such a method corresponds to the method described above and directed to figure 4. According to the present invention such a method is characterized in that the seal to be replaced is exposed by forcing gas into the shock-absorbing devices other than that having the seal to be replaced, to extend the shock-absorbing devices and to thereby expose the seal to be replaced.

According to the invention, there is provided also apparatus for use in performing that method, comprising:
pressurising means for supplying pressurised gas; and
distributing means operatively connected to the pressurising means for transferring pressurised gas to a plurality of the shock-absorbing devices, the distributing means including a separate gas line for each shock-absorbing device, and each such gas line including a valve to regulate gas flow through the line such an apparatus is known from US -A- 3 889 904. According to the invention such an apparatus is characterized in that each such gas line includes a pressure gauge for indicating gas pressure in the line and a drain valve for releasing pressure from the line.

When that apparatus is to be used in replacing an O-ring type seal in a shock absorbing device having a downwardly facing inclined surface and an attachment aperture formed in an adjacent and intersecting surface, it comprises also:
a generally trapezoidal body portion having an upwardly inclined surface;
a cylindrical portion adjacent the lower end of the inclined surface of the body portion and extending parallel to that inclined surface;
a plate connecting one end of the cylindrical portion to the body portion; and
a pin projecting downwardly from a lower surface of the main body portion, the diameter of the cylindrical portion corresponding to an internal diameter of the attachment aperture of the shock-absorbing devices and the angle of the inclined surface corresponding to the angle of the inclined surface of the shock-absorbing device with which the apparatus is adapted to cooperate, such that when the cylindrical portion is inserted into the attachment aperture, the inclined surfaces abut and when the pin is elevated the shock-absorbing device is elevated in a secure manner.

The method and apparatus of the invention enable the airplane body to be lifted using the shock absorbing devices of the airplane itself in place of large jacks. There is then no need to install large jacks, there is no concern about the selection of the locations for installing the jacks and the seal can be safely and securely exchanged.

The invention will now be described in greater detail by way of example only with reference to the accompanying drawings, in which:
Fig. 1 is a perspective view around one leg portion of a certain type of airplane;
Fig. 2 is a diagram showing a shock strut 3 lifted up and a track beam 5 disconnected;
Fig. 3 is a diagram showing a distributing apparatus to fill gas into the shock strut 3;
Fig. 4 is a diagram showing the exchanging work of a seal of a shock strut according to the conventional technique;
Fig. 5 is a perspective view of a seal exchanging apparatus of the invention;
Fig. 6 is a perspective view of an extension adapter which is attached to the seal exchanging apparatus; and
Fig. 7 is a diagram showing a piston 3c of a shock strut lifted up by a seal exchanging apparatus 50 in order to exchange a seal.

An embodiment of the invention is described below with reference to the drawings. A word "gas" which is used in the description of the embodiment denotes air or inorganic gas (for instance, N₂ gas).

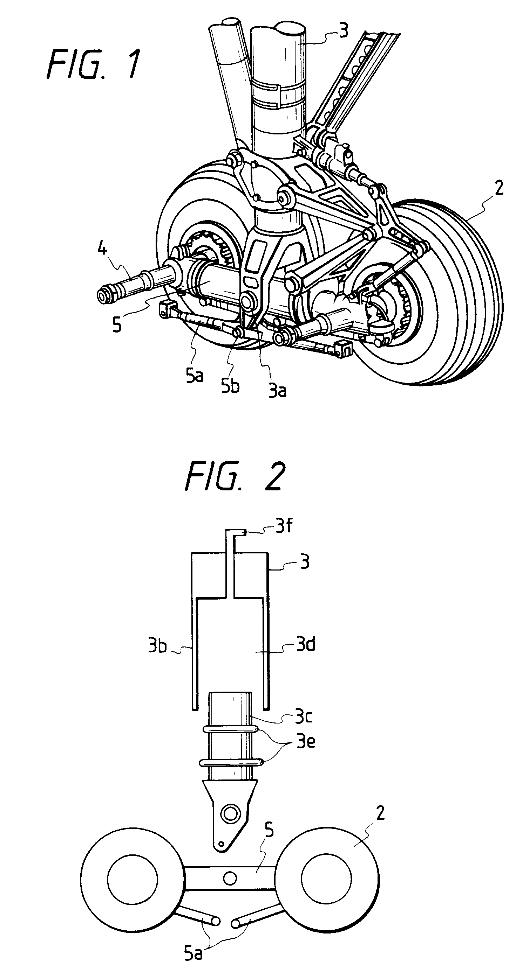

Fig. 1 is a perspective view around one leg portion of a certain type of airplane. For easy understanding of the construction, Fig. 1 shows only two wheels although there are generally four wheels. The wheels 2 attached to an axle 4 are coupled to the front and back positions by a track beam 5. Although not shown, an upper portion of the shock strut 3 which extends vertically is attached to the airplane body. Further, a lower portion of the shock strut 3 is attached to rods 5a by a pin 5b.

The structure of the shock strut 3 will now be briefly explained. Fig. 2 is a diagram showing a state in which the shock strut 3 is lifted up and is disconnected from the track beam 5. A part of the shock strut is shown as a cross sectional view. In Fig. 2, the shock strut 3 comprises a cylinder portion 3b and a piston portion 3c. In the ordinary state, the piston 3c is inserted into the cylinder 3b. Gas and oil fill the space 3d which is formed by the cylinder 3b and the piston 3c. The gas in the space 3d functions as a spring. The oil in the space 3d functions as a damper. The shock which the wheels receive upon landing of the airplane is reduced by the cooperation of the gas and the oil, thereby preventing the shock being directly transferred to the airplane main body. An oleo seal 3e is an O-ring type seal and seals the inner periphery of the cylinder 3b and the outer periphery of the piston 3c, thereby preventing the oil in the space 3d leaking to the outside. A gas port 3f is attached to the top of the cylinder 3b. Gas can be freely filled in or discharged from the cylinder 3b through the gas port 3f. The construction of the shock strut is well known and will be explained in detail below.

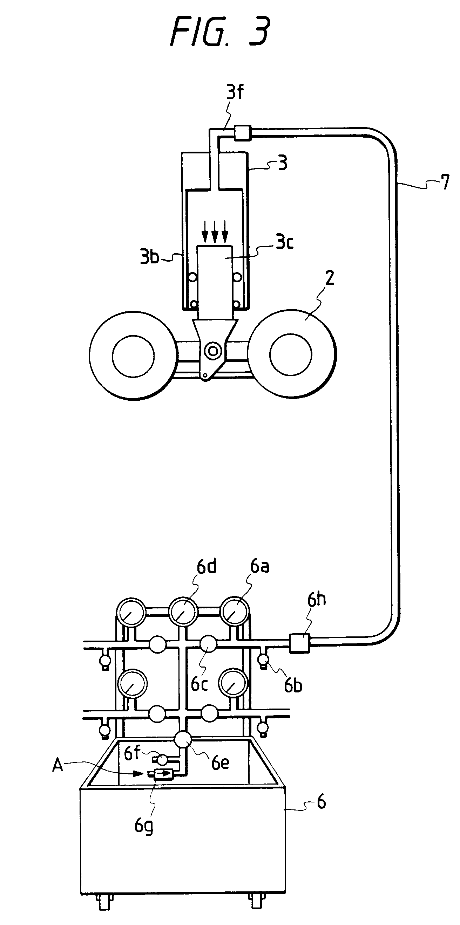

An apparatus for filling gas into the shock strut 3 will now be further described. Fig. 3 is a diagram showing a distributing apparatus for filling gas into the shock strut 3. In a certain type of airplane, five leg portions are provided so that when the seal of one of the five shock struts is to be exchanged, the remaining four leg portions can be used to support the airplane. Therefore, the distribution apparatus 6 shown in Fig. 3 has one gas inlet 6g and four gas outlets 6h. The four gas outlets should be respectively connected to four of the shock struts. However, in order to simplify the explanation and because all of them have a common construction, Fig.3 shows a state in which only one gas outlet 6h is coupled to a shock strut 3.

The gas inlet 6g of the distributing apparatus 6 is connected to pressurizing means, that is, a compressor (not shown). The gas inlet 6g is connected to the gas outlet 6h through a main valve 6e and a subvalve 6c. The gas outlet 6h is connected to the gas port 3f of the shock strut 3 through a hose 7.

A bypass is provided between the gas inlet 6g and the main valve 6e. A main drain valve 6f is provided at a front edge of the bypass. The main valve 6e can be freely opened or closed. When the main valve 6e is opened, the gas from the compressor can pass to the subvalve 6c. When the main valve 6e is closed, the passage of the gas from the compressor to the subvalve 6c is blocked. A main pressure gauge 6d is arranged between the main valve 6e and the subvalve 6c. A pressure of the gas which is supplied from the compressor is measured by the main pressure gauge 6d.

A bypass is provided between the subvalve 6c and the gas outlet 6h. A subdrain valve 6b is provided at a front edge of the bypass. The subvalve 6c can be freely opened or closed. When the subvalve 6c is opened, the gas which passes through the main valve 6e can pass to the gas outlet 6h side. When the subvalve 6c is closed, the passage of the gas which passes through the main valve 6e to the gas outlet 6h side is individually blocked. When the subvalve 6c is closed and the subdrain valve 6b is opened, the gas in the shock strut 3 is individually released into the atmosphere through the gas outlet 6h. A subpressure gauge 6a is provided between the subvalve 6c and the gas outlet 6h. The pressure of the gas in the shock strut 3 is individually measured by the subpressure gauge 6a.

Although the shock strut 3 inherently functions as a shock absorber by the gas filled therein, by supplying the gas at a pressure higher than the pressure that is ordinarily used, the gas presses the piston 3c, so that the shock strut itself can be extended to a length longer than its ordinary length.

Further, a procedure to exchange the seal of the shock strut 3 will now be described with reference to Figs. 2 and 3. First, referring to Fig. 3, the distributing apparatus 6 is coupled through hoses 7 to the shock struts 3 other than the shock strut whose seal is to be exchanged. To simplify the description, Fig. 3 shows a state in which the distributing apparatus 6 is connected to only one shock strut as mentioned above. It is now assumed that the gas has been supplied under pressure from the compressor (not shown) in the direction indicated by the arrow A. Although each subvalve 6c is opened, the main valve 6e is closed.

In a certain type of airplane, on the other hand, one leg portion is provided at a front position of the body, two leg portions are provided in parallel at rear positions of the body, and one leg portion is provided under each of the right and left wings. A total of five leg portions are consequently provided. In this case, for example, in case of exchanging the seal of the shock strut of the leg portion of one wing, it is sufficient to extend only two leg portions provided at the rear of the body and there is no need to extend the leg portion at the front of the body. This is because when the shock struts of two leg portions at the rear of the body are extended, the rear of the body of the airplane is lifted up so that the shock strut of the leg of the wing is also extended and the seal is eventually exposed. In such a case, accordingly, it is sufficient to connect hoses 7 to only two shock struts. In this case, to assure stability of the airplane body, the leg portion of the opposite wing must not be extended.

On the other hand, when either one of the leg portions at the rear of the body is a target for the seal exchange work, it is necessary to extend three leg portions: namely, the leg portions of the right and left wings; and the other leg portion at the rear of the body. In such a case, therefore, the hose 7 is connected to those three shock struts.

When the main valve 6e is opened from such a state, the gas which has been supplied from the compressor under a pressure is uniformly transferred to two or three shock struts 3. The transferred gas depresses the pistons 3c of the shock struts 3, thereby simultaneously extending two or three shock struts 3. Together with the extension of the shock struts 3, the body of the airplane is lifted up. When the main valve 6e is closed at a time at which the body has been lifted up to a predetermined position, the gas flow is stopped and the elevation of the body is also stopped. In case the degrees of extension of the shock struts 3 are different and the body is not horizontal right and left because of an unbalanced distribution of weight, by opening the subdrain valve 6b, the gas in the shock struts 3 is released into the atmosphere, thereby individually contracting the shock struts so that the body may regain a horizontal state. So long as a strong wind (about 15 knots or more) doesn't blow, the body is stably held even by properly extending the two or three shock struts as mentioned above. However, auxiliary jacks can be also used as necessary. In such a case, there is no need to extend all of the shock struts and it is sufficient to extend only the shock strut arranged at the position opposite to the position of the auxiliary jack.

Fig. 2 shows the shock strut whose seal is to be exchanged, in a state in which the shock struts are extended and the airplane body is lifted up. Although the cylinder 3b and the piston 3c move relative to each other, they are not completely separated but are in a state in which two seals are exposed. In such a state, the rods 5a and the track beam 5 are disconnected from the piston 3c by the pins 5b and 3a. The rods 5a are lifted up by, for example, means such as a rope or the like. In this state, the used seal can be cut out by a cutter or the like or can be also pulled out from the lower portion of the piston 3c. After the used seal has been removed, a new seal is installed from the lower end of the piston 3c so as to pass around the piston 3c and is moved to its predetermined location. After that, the piston 3c is lowered and the track beam 5 and the rod 5a are coupled by the pin 3a and the pin 5b.

Referring again to Fig. 3, when the main drain valve 6f of the distributing apparatus 6 is opened in the state in which the above operations were finished, all gas in the shock struts 3 connected to the hose 7 is released into the atmosphere, so that the airplane body descends. When the pressure of the gas in the shock struts 3 is set to a proper value while monitoring the subpressure gauge 6a, the main drain valve 6f is closed. It is sufficient to finely adjust the pressure in each shock strut 3 by respectively opening or closing the subvalve 6c and subdrain valve 6b. The gas port 3f is closed upon completion of the fine adjustment and the distributing apparatus 6 is disconnected from the shock struts 3. In this manner, the seal exchanging work is finished.

Although the invention has been described above with reference to the drawings, the number of gas outlets of the distributing apparatus 6 is not limited to four but can be an arbitrary number. On the other hand, in consideration of the stability of the airplane body deteriorating with an increase in wind strength, it is possible to construct the distributing apparatus such that an anemometer is provided and when the wind velocity is equal to 15 knots or more, an alarm is generated or by interlocking the alarm with an electromagnetic valve, the pressure-feeding of the gas from the compressor is stopped simultaneously with the generation of the alarm.

According to the method and apparatus for exchanging the seal for the shock absorbing apparatus of the present invention, since the shock absorbing apparatuses of the airplane are used in place of the large jacks and the airplane body is lifted up, there is no need to install the large jacks. In addition, workes have no concern about the installing locations of the large jacks or the like. The seal can therefore be safely and certainly exchanged.

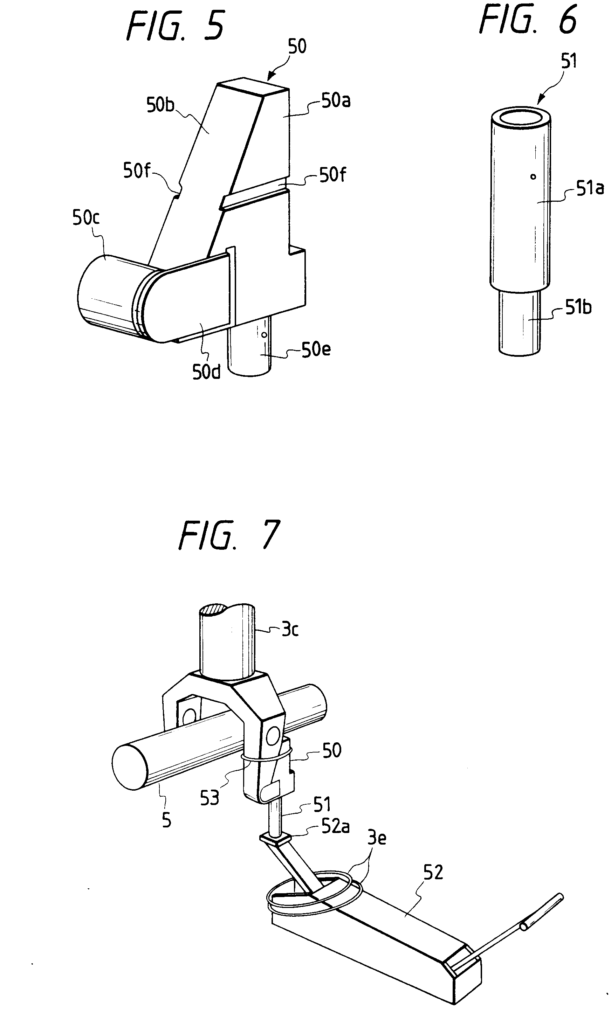

With reference to Figs. 5, 6, and 7, the seal exchanging apparatus of the invention will now be described. Fig. 5 is a perspective view of the seal exchanging apparatus of the invention. Fig. 6 is a perspective view of an extension adapter as a coupling member which is attached to the seal exchanging apparatus.

In Fig. 5, a seal exchanging apparatus 50 comprises: an almost trapezoidal main body 50a; a cylindrical portion 50c which extends beneath an inclined side surface 50b of the main body 50a in parallel with that surface; a plate 50d to couple the cylindrical portion 50c and the inclined surface 50b; and a pin 50e which projects from the lower surface of the main body 50a. Those component elements are integrally attached by welding or the like. A horizontal groove 50f is formed centrally in the front and back surfaces of the main body 50a. The outer diameter of the cylindrical portion 50c is almost equal to the inner diameter of the rod attaching hole of the piston 3c of the shock strut 3.

In Fig. 6, there is shown an extension adapter 51 formed as a coaxially coupled pipe portion 51a and cylindrical portion 51b. The inner diameter of the pipe portion 51a is almost equal to the outer diameter of the pin portion 50e of the seal exchanging apparatus 50. The pin portion 50e can be freely fitted into the pipe portion 51a. Outer diameters of the cylindrical portion 51b and pin portion 50e are almost equal to an inner diameter of a hole (not shown) formed on a supporting surface 52a of an alligator jack 52 shown in Fig. 7.

Fig. 7 is a diagram showing a state in which the piston 3c of the shock strut is lifted up using the seal exchanging apparatus 50 in order to exchange the seal. To obtain such a state, the seal exchanging apparatus 50 is first coupled to the extension adapter 51, the cylindrical portion 50c of the seal exchanging apparatus 50 which is supported by the alligator jack 52 is further inserted into the rod attaching hole of the piston 3c, and the slant surface 50b comes into contact with the side of the leg of the piston 3c. As shown in the diagram, the new seal 3e is previously allowed to pass over the supporting surface 52a of the alligator jack 52 and is set below the supporting surface 52a. In this state, the extension adapter 51 is put onto the supporting surface 52a of the alligator jack 52, the jack is made operative, and the piston portion 3c is lifted up from the track beam 5. The groove portions 50f of the seal exchanging apparatus 50 are used when the seal exchanging apparatus 50 is bound to the piston portion 3c by a wire 53 or the like as shown in Fig. 7, thereby preventing the seal exchanging apparatus unexpectively falling off when the piston 3c is elevated. As will be understood from Fig. 7, the thickness of the seal exchanging apparatus 50 is almost equal to the thickness of the leg portion of the piston 3c, thereby preventing the seal exchanging apparatus interfering with the track beam 5 when the piston 3c is lifted up.

The used seal can be previously cut out by a cutter or the like. Or, at this stage, the used seal may be also pulled out from the lower portion of the piston 3c. After the used seal has been removed, the new seal 3e is allowed to pass from the alligator jack 52 through the seal exchanging apparatus 50 and the leg of the piston 3c and is moved to its predetermined location. Since the seal 3e is made of a rubber, it can be extended to a certain degree. After that, the alligator jack 52 is made operative and the piston 3c is dropped down, thereby coupling the track beam 5 and the rod 5a by the pin 3a and the pin 5b.

Referring again to Fig. 3, in a state after completion of the above work, when the main drain valve 6f of the distributing apparatus 6 is opened, all gas in the shock struts 3 coupled to the hose 7 is released into the atmosphere and the airplane body descends. When the pressure of the gas in the shock struts 3 is set to a proper value while monitoring the subpressure gauge 6a, the main drain valve 6f is closed. It is sufficient to finely adjust the pressure in each shock strut 3 by respectively opening or closing the subvalve 6c and the subdrain valve 6b. The gas port 3f is closed at a time point of the completion of the fine adjustment and the distributing apparatus 6 is disconnected from the shock strut 3.

The seal exchanging work is finished as mentioned above.

According to the apparatus for exchanging the seal for the shock absorbing device of the invention described in detail above, the outer diameter of the cylindrical portion is almost equal to the inner diameter of the attaching hole of the shock absorbing device and the inclination of the inclined surface, is equal to the inclination of the reverse inclined surface. Therefore, when the cylindrical portion is inserted into the attaching hole and the inclined surface comes into contact with the reverse inclined surface, the cylindrical portion is surely attached to the shock absorbing device. By elevating the pin portion, the shock absorbing device is lifted up while being held.

## Claims

1. A method for replacing an O-ring type seal (3e) in a shock-absorbing device (3) on a body (1) which is mounted on wheels (2) via a plurality of such shock-absorbing devices, each shock-absorbing device incorporating a cylinder (3b) and a cooperating piston (3c) and one of the cylinder and piston being coupled to the body and the other being coupled to the wheels, and a fluid in the space between the cylinder and the piston to absorb shock forces which are transferred from the wheels to the body, the method comprising the steps of:
exposing the seal (3e) to be replaced by extending the piston (3c) and the cylinder (3b) to wards each other;
removing the exposed seal (3e);
separating from its associated wheels the shock-absorbing device having the seal (3e) to be replaced;
inserting a new seal from a portion of the shock-absorbing device separated from the wheels; and
locating the new seal in its operative position, characterized in that the seal (3e) to be replaced is exposed by forcing gas into the shock-absorbing devices other than that having the seal (3e) to be replaced, to extend the shock-absorbing devices and to thereby expose the seal (3e) to be replaced.

2. A method according to claim 1, including the further step of purging the gas from the shock-absorbing devices other than that having the replaced seal.

3. A method according to claim 1 or claim 2, wherein the gas is inorganic gas.

4. A method according to claim 1 or claim 2, wherein the gas is air.

5. Apparatus for use in performing the method according to claim 1, comprising:
pressurising means for supplying pressurised gas; and
distributing means (6) operatively connected to the pressurising means for transferring pressurised gas to a plurality of the shock-absorbing devices the distributing means (6) including a separate gas line (7) for each shock-absorbing device, and each such gas line (7) including a valve (6c) to regulate gas flow through the line characterized in that each such gas line includes a pressure gauge (6a) for indicating gas pressure in the line and a drain valve (6b) for releasing pressure from the line.

6. Apparatus according to claim 5, wherein the distributing means (6) further includes a gauge (6d) to indicate the pressure of gas supplied from the pressurising means, and a valve (6e) to regulate the supply of pressurised gas from the pressurising means.

7. Apparatus according to claim 5 or claim 6 for use in replacing an O-ring type seal (3e) in a shock-absorbing device (3) having a downwardly facing inclined surface and an attachment aperture formed in an adjacent and intersecting surface with respect to said inclined surface, the apparatus comprising also:
a generally trapezoidal body portion (50a) having an upwardly inclined surface (50b) ;
a cylindrical portion (50c) adjacent the lower end of the inclined surface (50b) of the body portion (50a) and extending parallel to that inclined surface(50b);
a plate (50d) connecting one end of the cylindrical portion (50c) to the body portion (50a); and
a pin (50e) projecting downwardly from a lower surface of the main body portion (50a), the diameter of the cylindrical portion (50c) corresponding to an internal diameter of the attachment aperture of the shock-absorbing devices and the angle of the upwardly inclined surface corresponding to the angle of the downwardly inclined surface of the shock-absorbing device with which the apparatus is adapted to cooperate, such that when the cylindrical portion is inserted into the attachment aperture, the inclined surfaces abut and when the pin is elevated the shock-absorbing device is elevated in a secure manner.

8. Apparatus according to claim 7, wherein the body portion includes lateral grooves (50f) adapted to accommodate binding means (53) for binding the shock-absorbing device to the body portion.

9. Apparatus according to claim 7 or claim 8, which includes also a coupling member (51) adapted to be coupled to the pin.

## Patentansprüche

1. Verfahren zum Austauschen einer O-Ring-Dichtung (3e) einer Stoßdämpfvorrichtung (3) an einem Körper (1), der über eine Vielzahl derartiger Stoßdämpfvorrichtungen an Rädern (2) angebracht ist, wobei zu jeder Stoßdämpfvorrichtung ein Zylinder und ein damit zusammenwirkender Kolben gehört, und entweder der Zylinder (3b) oder der Kolben (3c) mit dem Körper verbunden ist, und das andere Teil mit den Rädern verbunden ist, sowie ein Fluid im Raum zwischen dem Zylinder und dem Kolben, das Stoßkräfte absorbiert, die von den Rändern auf den Körper übertragen werden, wobei das Verfahren die folgenden Schritte umfaßt:
Freilegen der auszutauschenden Dichtung (3e), indem der Kolben (3c) und der Zylinder (3b) aufeinander zu ausgedehnt werden;
Entfernen der freiliegenden Dichtung (3e);
Trennen der Stoßdämpfvorrichtung mit der auszutauschenden Dichtung (3e) von ihren dazugehörigen Rädern;
Einsetzen einer neuen Dichtung von einem Abschnitt der von den Rädern getrennten Stoßdämpfvorrichtung aus; und
Anordnen der neuen Dichtung in ihrer Funktionsposition,
**dadurch gekennzeichnet**, daß die auszutauschende Dichtung (3e) freigelegt wird, indem in die Stoßdämpfvorrichtungen außer der, bei der die Dichtung (3e) ausgewechselt werden muß, Gas gedrückt wird, um die Stoßdämpfvorrichtungen auszudehnen und so die auszutauschende Dichtung (3e) freizulegen.

2. Verfahren nach Anspruch 1, das des weiteren den Schritt des Ablassens des Gases aus den Stoßdämpfvorrichtunqen außer der mit der ausgetauschten Dichtung enthält.

3. Verfahren nach Anspruch 1 oder Anspruch 2, wobei das Gas anorganisches Gas ist.

4. Verfahren nach Anspruch 1 oder Anspruch 2, wobei das Gas Luft ist.

5. Vorrichtung zum Einsatz bei der Ausführung dieses Verfahrens nach Anspruch 1, die umfaßt:
eine Druckeinrichtung zur Zufuhr von unter Druck stehendem Gas; und
eine Verteilereinrichtung (6), die funktionell mit der Druckeinrichtung verbunden ist und einer Vielzahl der Stoßdämpfvorrichtungen unter Druck stehendes Gas zuführt, wobei die Verteilereinrichtung (6) eine separate Gasleitung (7) für jede Stoßdämpfvorrichtung enthält, und jede derartige Gasleitung (7) ein Ventil (6c) enthält, das den Gasstrom durch die Leitung reguliert.
**dadurch gekennzeichnet**, daß jede derartige Gasleitung einen Druckmesser (6a) enthält, der den Gasdruck in der Leitung anzeigt, sowie ein Ablaßventil (6b) zum Ablassen von Druck aus der Leitung.

6. Vorrichtung nach Anspruch 5, wobei die Verteilereinrichtung (6) des weiteren eine Meßeinrichtung (6d) enthält, die den Druck von von der Druckeinrichtung zugeführtem Gas anzeigt, sowie ein Ventil (6e), das die Zufuhr von unter Druck stehendem Gas von der Druckeinrichtung reguliert.

7. Vorrichtung nach Anspruch 5 oder Anspruch 6 zum Einsatz beim Austauschen einer O-Ring-Dichtung (3e) in einer Stoßdämpfvorrichtung (3) mit einer nach unten gerichteten geneigten Fläche und einer Anbringungsöffnung, die in einer an die geneigte Fläche angrenzenden und sie schneidenen Fläche ausgebildet ist, wobei die Vorrichtung des weiteren umfaßt:
einen im allgemeinen trapezförmigen Körperabschnitt (50a) mit einer nach oben geneigten Fläche (50b);
einen zylindrischen Abschnitt (50c), der an das untere Ende der geneigten Fläche (50b) des Körperabschnitts (50a) angrenzt und sich parallel zu dieser geneigten Fläche (50b) erstreckt;
eine Platte (50d), die ein Ende des zylindrischen Abschnitts (50c) mit dem Körperabschnitt (50a) verbindet; und
einen Zapfen (50e), der von einer unteren Fläche des Hauptkörperabschnitts (50a) nach unten vorsteht, wobei der Durchmesser des zylindrischen Abschnitts (50c) einem Innendurchmesser der Anbringungsöffnung der Stoßdämpfvorrichtung entspricht, und der Winkel der nach oben geneigten Fläche dem Winkel der nach unten geneigten Fläche der Stoßdämpfvorrichtungen entspricht, mit der die Vorrichtung zusammenwirkt, so daß, wenn der zylindrische Abschnitt in die Anbringungsöffnung eingeführt wird, die geneigten Flächen aneinanderliegen, und die Stoßdämpfvorrichtung sicher angehoben wird, wenn der Zapfen angehoben wird.

8. Vorrichtung nach Anspruch 7, wobei Körperabschnitt seitliche Nuten (50f) enthält, die Verbindungseinrichtungen (53) zur Verbindung der Stoßdämpfvorrichtung mit dem Körperabschnitt aufnehmen.

9. Vorrichtung nach Anspruch 7 oder Anspruch 8, die des weiteren ein Verbindungselement (51) enthält, das mit dem Zapfen verbunden wird.

## Revendications

1. Procédé de remplacement du joint d'étanchéité du type joint torique (3e) d'un dispositif d'amortissement de choc (3) du fuselage (1) qui est monté sur des roues (2) au moyen d'une pluralité de tels dispositifs d'amortissement de choc, chaque dispositif d'amortissement de choc incorporant un cylindre (3b) et un piston coopérant (3c) et soit le cylindre ou soit le piston étant reliés au fuselage et l'autre étant relié aux roues, et un fluide qui se trouve dans l'évidement entre le cylindre et le piston pour absorber les forces de choc qui sont transférées depuis les roues vers le fuselage, le procédé comprenant les étapes de :
mise à nu du joint d'étanchéité (3e) devant être remplacé en étirant le piston (3c) et le cylindre (3b) l'un vers l'autre;
extraction du joint mis à nu (3e);
séparation du dispositif d'amortissement de choc dont le joint d'étanchéité (3e) doit être remplacé des roues qui lui sont associées;
introduction d'un nouveau joint d'étanchéité à partir d'une zone du dispositif d'amortissement de choc séparée des roues; et
mise en place du nouveau joint d'étanchéité dans sa position opérationnelle, caractérisé en ce que le joint d'étanchéité (3e) devant être remplacé est mis à nu en insufflant du gaz dans les dispositifs d'amortissement de choc autres que celui dont le joint d'étanchéité (3e) doit être remplacé, pour étirer les dispositifs d'amortissement de choc et pour mettre à nu, par ce moyen, le joint d'étanchéité (3e) devant être remplacé.

2. Procédé selon la revendication 1, comprenant l'étape supplémentaire de purge du gaz provenant des dispositifs d'amortissement de choc autres que ceux dont les joints d'étanchéité sont remplacés.

3. Procédé selon la revendication 1 ou la revendication 2, dans lequel le gaz est un gaz inorganique.

4. Procédé selon la revendication 1 ou à la revendication 2, dans lequel le gaz est de l'air.

5. Dispositif destiné à être utilisé pour mettre en oeuvre le procédé selon la revendication 1, comprenant :
un moyen de compression pour fournir du gaz comprimé; et
un moyen de distribution (6) relié de manière opérationnelle au moyen de compression pour transférer le gaz comprimé à une pluralité de dispositifs d'amortissement de choc, le moyen de distribution (6) comprenant une conduite de gaz distincte (7) pour chaque dispositif d'amortissement de choc, et chaque conduit de gaz (7) comprenant une vanne (6c) pour régler la circulation de gaz dans le conduit, caractérisé en ce que chaque conduit de gaz comporte une jauge de pression (6a) destinée à l'indication de la pression du gaz dans le conduit et une soupape de vidange (6b) pour relâcher la pression du conduit.

6. Dispositif selon la revendication 5, dans lequel le moyen de distribution (6) comprend en outre une jauge (6d) pour indiquer la pression du gaz fourni par le moyen de compression, et une vanne (6e) pour régler l'alimentation de gaz comprimé provenant du moyen de compression.

7. Dispositif selon la revendication 5 ou la revendication 6 destiné à être utilisé pour le remplacement d'un joint d'étanchéité du type joint torique (3e) d'un dispositif d'amortissement de choc (3) comportant une surface inclinée tournée vers le bas et une ouverture de fixation formée dans une surface adjacente à ladite surface inclinée et recoupant celle-ci, le dispositif comprenant également :
une partie corps globalement trapézoïdale (50a) ayant une surface inclinée vers le haut (50b);
une partie cylindrique (50c) adjacente à l'extrémité inférieure de la surface inclinée (50b) de la partie corps (50a) et s'étendant parallèlement à ladite surface inclinée (50b);
une plaque (50d) reliant l'une des extrémités de la partie cylindrique (50c) à la partie corps (50a); et
une broche (50e) faisant saillie vers le bas à partir d'une surface inférieure de la partie corps principale (50a), le diamètre de la partie cylindrique (50c) correspondant au diamètre intérieur de l'ouverture de fixation des dispositifs d'amortissement de choc et l'angle de la surface inclinée vers le haut correspondant à l'angle de la surface inclinée vers le bas du dispositif d'amortissement de choc auquel le dispositif est adapté pour coopérer, de telle façon que lorsque la partie cylindrique est introduite dans l'ouverture de fixation, les surfaces inclinées viennent en butée et lorsque la broche est surélevée, le dispositif d'amortissement de choc est surélevé de manière sûre.

8. Dispositif selon la revendication 7, dans lequel la partie corps comprend des rainures latérales (50f) conçues pour loger des moyens de liaison (53) pour relier le dispositif d'amortissement de choc avec la partie corps.

9. Dispositif selon la revendication 7 ou la revendication 8, qui comprend également un élément d'accouplement (51) conçu pour être accouplé avec la broche.
